# EUROPÄISCHE PATENTSCHRIFT

(11) **EP 4 506 238 B1**
(45) Veröffentlichungstag und Bekanntmachung des Hinweises auf die Patenterteilung: **25.03.2026**
(21) Anmeldenummer: 24189327.0
(22) Anmeldetag: 18.07.2024
(51) Int. Cl.: B62K 3/10, B62K 15/00

(54) **DRAISINE**
BALANCE BIKE
DRAISIENNE

(30) Priorität: 08.08.2023 LU 504877
(43) Veröffentlichungstag der Anmeldung: 12.02.2025
(73) Patentinhaber: Hinz, Uwe, 25795 Weddingstedt (DE)
(72) Erfinder: Hinz, Uwe, 25795 Weddingstedt (DE)
(74) Vertreter: Patentanwälte Bernhardt / Wolff Partnerschaft mbB

(56) Entgegenhaltungen:
- WO-A1-2017/140847
- CN-A- 103 770 877

## Beschreibung

Die Erfindung betrifft eine Draisine, insbesondere Laufrad, die ein geradliniges Sitzrohr, eine Einheit zum Lenken der Draisine und ein Rohr zur Verbindung des Sitzrohrs und der Lenkeinheit umfasst, wobei das Sitzrohr und das Verbindungsrohr zueinander versetzt angeordnet sind.

Fahrzeuge dieser Art sind aus CN 103 770 877 A und WO 2017/140847 A1 bekannt, die ein Verbindungsrohr aufweisen, dass seitlich zu einem Sitzrohr versetzt ist und dieses mit einer Lenkeinheit verbindet.

Eine weitere Draisine ist durch Benutzung bekannt.

Der Erfindung liegt die Aufgabe zugrunde, eine Draisine zu schaffen, die konstruktiv besonders viele Freiheiten bietet.

Erfindungsgemäß wird diese Aufgabe dadurch gelöst, dass eine Längsachse des Verbindungsrohrs in einer zu einer Rotationsachse eines Hinterrads der Draisine senkrechten Symmetrieebene des Hinterrads angeordnet ist.

Dank der erfindungsgemäßen Anordnung können das Sitzrohr und das Verbindungsrohr in Richtung einer Längsachse des Verbindungsrohrs und/oder des Sitzrohrs gesehen derart versetzt sein, dass sie nebeneinander angeordnet sind. Aussparungen oder Durchführungen an den Verbindungsstellen der Rohre, wie sie bei bekannten Draisinen erforderlich sind, brauchen daher nicht vorgesehen werden. Dadurch ergeben sich weitere Möglichkeiten bei der Konstruktion der Draisine, die vorzugsweise zweirädrig und/oder einspurig ist.

In einer Ausgestaltung der Erfindung ist die Position des Sitzrohrs und/oder der Lenkeinheit entlang des Verbindungsrohrs und/oder die Länge des Verbindungsrohrs verstellbar. Es wird ermöglicht, den Abstand zwischen dem Sattelrohr und der Lenkeinheit, vorzugsweise zwischen einem an dem Sitzrohr angeordneten Hinterrad und einem an der Lenkeinheit angeordneten Vorderrad, einzustellen.

Das Verbindungsrohr ist zweckmäßigerweise zumindest abschnittsweise, insbesondere vollständig, geradlinig. Zweckmäßigerweise ist das Verbindungsrohr direkt an dem Sitzrohr und/oder der Lenkeinheit befestigt. Vorzugsweise ist das Verbindungsrohr ein Rundrohr, ein Vierkantrohr und/oder ein ovales Rohr.

In einer Ausführungsform der Erfindung ist das Verbindungsrohr längenverstellbar. Zweckmäßigerweise ist es aus zumindest zwei Teilrohren gebildet, die vorzugsweise zumindest abschnittsweise, besonders bevorzugt koaxial, ineinander angeordnet sind.

Das Verbindungsrohr kann teleskopartig verstellbar sein. Es wird ermöglicht, den Abstand zwischen dem Sattelrohr und der Lenkeinheit, insbesondere zwischen dem Hinterrad und dem Vorderrad, besonders einfach einzustellen.

Es versteht sich, dass das Verbindungsrohr aus einem einzigen Rohr gebildet sein könnte.

Die Draisine kann vorgesehen sein derart, dass der Abstand zwischen dem Sattelrohr und der Lenkeinheit stufenlos oder in vorgegebenen Stufen verstellbar ist.

Zweckmäßigerweise ist das Verbindungsrohr, insbesondere das Teilrohr, klappbar und/oder zumindest teilweise abnehmbar. Vorzugsweise weist das Verbindungsrohr zumindest ein Gelenk, insbesondere ein Scharnier, auf.

Zweckmäßigerweise weist das Verbindungsrohr, insbesondere zumindest die Teilrohre, einen rechteckigen, bevorzugt quadratischen, dreieckigen, kreisrunden und/oder ovalen Querschnitt auf.

Vorzugsweise ist das Verbindungsrohr lösbar an dem Sitzrohr und/oder der Lenkeinheit befestigt.

Zweckmäßigerweise ist eines der Teilrohre mit dem Sitzrohr und/oder ein weiteres der Teilrohre mit der Lenkeinheit, vorzugsweise fest, verbunden. In einer Ausgestaltung der Erfindung sind die beiden letztgenannten Teilrohre mittels zumindest eines Verbinderteilrohrs, das ebenfalls eines der Teilrohre bildet, verbunden. Zweckmäßigerweise sind die Teilrohre lösbar miteinander verbunden. Das Verbinderteilrohr ist vorzugsweise in die beiden Teilrohre einsetzbar und dort mittels eines Befestigungsmittels der Draisine befestigbar. Auch das Verbinderteilrohr könnte derart gebildet sein, dass es teleskopartig verstellbar ist. Das Teilrohr, das mit dem Sitzrohr verbunden ist, könnte unlösbar mit dem Sitzrohr verbunden sein, vorzugsweise durch Schweißen.

Vorzugsweise ist das Verbinderteilrohr lösbar mit dem Teilrohr, das an dem Sitzrohr befestigt ist, und/oder lösbar an dem Teilrohr, das an der Lenkeinheit befestigt ist, verbunden. Die Verbindung zwischen dem Sitzrohr und der Lenkeinheit kann gelöst werden, um das Verbinderteilrohr auszutauschen oder die Draisine auseinanderzubauen.

In einer besonders bevorzugten Ausführungsform der Erfindung ist das Verbinderteilrohr aus zwei Endteilen und einem Gelenkteil gebildet. Dadurch kann die Draisine besonders einfach verstaut werden.

Zweckmäßigerweise liegen die Endteile von innen an den an der Lenkeinheit und dem Sitzrohr gehaltenen Teilrohren an. Vorzugsweise weisen die in den Teilrohren angeordneten Endteile eine Form auf, mittels welcher sie drehfest mit den Teilrohren verbunden sind. Dadurch können die in den Teilrohren angeordneten Endteile nicht gegen die Teilrohre verdreht werden und das Laufrad wird besonders stabil. Die Endteile könnten durch, insbesondere vollständig geradlinige, Rohre gebildet sein. Zweckmäßigerweise weisen die Endteile einen rechteckigen, bevorzugt quadratischen, dreieckigen oder ovalen Querschnitt auf. Die Endteile weisen vorzugsweise unterschiedliche Längen auf.

Zweckmäßigerweise sind die Endteile mittels des, insbesondere starren, Gelenkteils miteinander verbunden, wobei die Endteile jeweils gelenkig mit dem Gelenkteil verbunden sind. Vorzugsweise sind die gebildeten Gelenke jeweils in der Form eines Scharniers gebildet. Dadurch ist jedes der Endteile jeweilig zu dem Gelenkteil beweglich und das Verbinderteilrohr klappbar.

Vorzugsweise sind die Drehachsen der beiden Gelenke und/oder Scharniere mittels des Gelenkteils in einem Abstand voneinander gehalten, der mindestens der Breite der Teilrohre und/oder der Endteile entsprechen könnte.

In einer besonders bevorzugten Ausgestaltung der Erfindung ist die Draisine zur Anordnung in einer Komfortfahrstellung und einer Kompaktfahrstellung eingerichtet, wobei der Abstand zwischen dem Hinterrad und dem Vorderrad, insbesondere der Abstand zwischen dem Sitzrohr und der Lenkeinheit, in der Komfortfahrstellung größer ist als in der Kompaktfahrstellung.

Zweckmäßigerweise kann zwischen der Kompaktfahrstellung und der Komfortfahrstellung gewechselt werden, indem die Länge des Verbindungsrohrs geändert wird, das Verbindungsrohr durch ein Verbindungsrohr anderer Länge ausgetauscht wird und/oder die Position des Sitzrohrs und/oder der Lenkeinheit entlang des Verbindungsrohrs verstellt wird. Vorzugsweise ist die Länge des Verbindungsrohrs einstellbar indem die Position der Teilrohre und/oder der Teilrohre und zumindest eines der Endteile, insbesondere des längeren Endteils, relativ verstellbar sind, vorzugsweise unter Verschiebung.

In der Komfortfahrstellung ist der Abstand zwischen einer Rotationsachse des Hinterrads und einer Rotationsachse des Vorderrads zweckmäßigerweise mindestens das 1,4-fache, bevorzugt das 1,4 bis 2-fache, besonders bevorzugt das 1,6 bis 1,8-fache, des Durchmessers des Hinterrads oder des Vorderrads oder der Summe der Radien des Hinterrads und des Vorderrads. Vorzugsweise beträgt der Abstand zwischen Rotationsachsen des Hinterrads und des Vorderrads in der Komfortfahrstellung 0,5 m bis 1,2 m, bevorzugt 0,5 m bis 1 m, besonders bevorzugt 0,6 m bis 0,8 m.

Die Draisine kann, insbesondere stufenlos oder in Stufen, an die Schrittlänge eines Fahrers angepasst werden.

In der Kompaktfahrstellung ist der Abstand zwischen den Rotationsachsen des Hinterrads und des Vorderrads zweckmäßigerweise größer als die Summe der Radien des Hinterrads und des Vorderrads und ist bevorzugt höchstens das 1,2-fache, besonders bevorzugt höchstens das 1,15-fache, der Summe der Radien des Hinterrads und des Vorderrads. Vorzugsweise beträgt der Abstand zwischen den Rotationsachsen des Hinterrads und des Vorderrads in der Kompaktfahrstellung 0,3 m bis 0,8 m, bevorzugt 0,4 m bis 0,6 m.

In einer Ausführungsform der Erfindung ragt in der Kompaktfahrstellung das Verbindungsrohr oder zumindest eines der Teilrohre, insbesondere das zumindest eine Verbinderteilrohr, mit seinem der Lenkeinheit abgewandten Ende über das Sitzrohr hinaus und vorzugsweise nicht über das Hinterrad hinaus. Eine derartige Draisine ist besonders wendig und platzsparend.

In einer Ausführungsform der Erfindung liegen einander zugewandte Enden des an dem Sitzrohr befestigten Teilrohrs und des an der Lenkeinheit befestigten Teilrohrs aneinander an, wobei die beiden aneinander anliegenden Teilrohre vorzugsweise durch das Verbinderteilrohr verbunden sind.

In einer besonders bevorzugten Ausführungsform der Erfindung ist die Draisine zur Anordnung in einer Packstellung vorgesehen, in welcher die Draisine besonders platzsparend angeordnet werden kann, z.B. zum Verstauen oder zur Mitnahme. Zweckmäßigerweise ist die Draisine in der Packstellung angeordnet derart, dass ein Abstand zwischen dem Sitzrohr und der Lenkeinheit minimal ist, vorzugsweise durch Reduzierung der Länge des Verbindungsrohrs auf die minimale Länge, durch Verstellung der Position des Sitzrohrs und/oder der Lenkeinheit entlang des Verbindungsrohrs und/oder durch Lösen des Verbindungsrohrs von dem Sitzrohr und/oder der Lenkeinheit.

Der Abstand zwischen den Rotationsachsen des Hinterrads und des Vorderrads der Draisine beträgt zweckmäßigerweise in der Packstellung höchstens das 1,2-fache, besonders bevorzugt höchstens das 1,02-fache, der Summe der Radien des Hinterrads und des Vorderrads. Vorzugsweise ist der Abstand zwischen den Rotationsachsen des Hinterrads und des Vorderrads in der Packstellung und in der Kompaktfahrstellung gleich.

in einer weiteren Packstellung sind das Hinterrad und das Vorderrad nebeneinander angeordnet. Der Abstand zwischen den Rotationsachsen des Vorderrads und des Hinterrads können so noch geringer sein und die Draisine noch kompakter angeordnet werden.

In einer Ausführungsform der Erfindung ragt in der Packstellung das der Lenkeinheit abgewandte Ende des Verbindungsrohrs oder zumindest eines der Teilrohre, insbesondere des zumindest einen Verbinderteilrohrs, über das Sitzrohr hinaus und vorzugsweise nicht über das Hinterrad hinaus.

In einer Ausführungsform der Erfindung ist das Verbindungsrohr, insbesondere eines der Teilrohre, in der Packstellung gelöst von dem Sitzrohr und/oder der Lenkeinheit, insbesondere von den weiteren Teilrohren, die an dem Sitzrohr und/oder der Lenkeinheit gehalten sind. Es wird ermöglicht, die Draisine in zwei separate Baugruppen zu trennen. Vorzugsweise weisen die Baugruppen, insbesondere das Sitzrohr und/oder die Lenkeinheit, Mittel, insbesondere Magnete oder Schellen, auf, um sie aneinander zu befestigen. Alternativ sind die Baugruppen in der Packstellung verbunden mittels des geklappten Verbinderteilrohrs, wobei jeweils eines der Endteile mit einer der Baugruppen, insbesondere einem der Teilrohre, verbunden ist. Es wird ermöglicht, das Verbindungsrohr zu klappen.

Vorteilhaft für die Anordnung der Draisine in der Packstellung ist es, wenn das Hinterrad und/oder das Vorderrad in der oben beschriebenen Weise nur auf einer Seite gehalten ist.

Die Lenkeinheit umfasst in einer Ausgestaltung der Erfindung ein zumindest abschnittsweise, insbesondere vollständig, geradliniges Lenkrohr, wobei das Vorderrad, vorzugsweise ausschließlich, an dem Lenkrohr angeordnet ist. Zweckmäßigerweise ist das Hinterrad, vorzugsweise ausschließlich, an dem Sitzrohr angeordnet.

Zweckmäßigerweise weist das Sitzrohr oder eine zumindest abschnittsweise, insbesondere vollständig, geradlinige Sattelstütze, die zumindest teilweise in dem Sitzrohr angeordnet ist, eine Halterung für einen Sattel auf.

In der Packstellung ist in einer Ausgestaltung der Erfindung die Sattelstütze bis zu einem Anschlag, der vorzugsweise durch die Sattelhalterung oder den Sattel gebildet ist, in das Sitzrohr eingeschoben. Zweckmäßigerweise ragt die Sattelstütze in der Packstellung mit dem der Sattelhalterung abgewandten Ende aus dem Sitzrohr heraus. Vorzugsweise ist das Sitzrohr, insbesondere um diese Anordnung zu ermöglichen, vollständig geradlinig gebildet. Alternativ könnte in der Packstellung die Sattelstütze vollständig aus dem Sitzrohr entnommen sein.

In einer Ausführungsform der Erfindung weist das Lenkrohr oder eine zumindest abschnittsweise, insbesondere vollständig, geradlinige Lenkstütze, die zumindest teilweise in dem Lenkrohr angeordnet ist, eine Halterung für einen Lenker auf. Die Lenkstütze könnte in dem Lenkrohr zum Einstellen der Höhe und/oder Ausrichtung des Lenkers verschiebbar und/oder verdrehbar sein. Zweckmäßigerweise bilden das Lenkrohr und die Lenkstütze zusammen ein geradliniges Rohr mit vorzugsweise teleskopartig verstellbarer Länge.

Die Lenkstütze ist in der Packstellung zweckmäßigerweise bis zu einem Anschlag, der vorzugsweise durch die Lenkerhalterung und/oder den Lenker gebildet ist, in das Lenkrohr eingeschoben. In einer Ausgestaltung der Erfindung ragt das der Lenkerhalterung abgewandte Ende der Lenkstütze in der Packstellung aus dem Lenkrohr heraus. Alternativ könnte in der Packstellung die Lenkstütze vollständig aus dem Lenkrohr entnommen sein.

Eine Längsachse des Lenkers, vorzugsweise eine Längsachse eines Teilabschnitts des Lenkers, an dem der Lenker mittels der Lenkerhalterung gehalten ist, ist zweckmäßigerweise in der Packstellung in einem Winkel zu der Rotationsachse des Vorderrads angeordnet, bevorzugt in einem Winkel von 70 ° bis 90 °, besonders bevorzugt von 80 ° bis 90 °. Vorzugsweise wird die Längsachse des Lenkers, insbesondere des Teilabschnitts des Lenkers, senkrecht zu der Rotationsachse des Vorderrads angeordnet und somit die in der Packstellung angeordnete Draisine schmaler.

In einer Ausgestaltung der Erfindung ist die Rotationsachse des Hinterrads derart versetzt zu der Längsachse des Sitzrohrs, dass die Sattelstütze in dem Sitzrohr an einer Radachse des Hinterrads vorbei verschoben werden kann. Zweckmäßigerweise ist die Rotationsachse des Vorderrads derart versetzt zu einer Längsachse des Lenkrohrs, dass die Lenkstütze in dem Lenkrohr an einer Radachse des Vorderrads vorbei verschoben werden kann. Es wird ermöglicht, die Sattelstütze über die Rotationsachse des Hinterrads hinaus innerhalb des Sitzrohrs bzw. die Lenkstütze über die Rotationsachse des Vorderrads hinaus innerhalb des Lenkrohrs zu verschieben.

Die Rotationsachse des Hinterrads ist zweckmäßigerweise versetzt zu der Längsachse des Sitzrohrs angeordnet, vorzugsweise in Richtung weg von der Lenkeinheit. Durch den Versatz des Hinterrads wird die Stabilität beim Fahren mit der Draisine erhöht, insbesondere wird der Schwerpunkt des Systems aus Draisine und Fahrer in Richtung hin zur Mitte zwischen Vorder- und Hinterradachse verlagert.

Die Rotationsachse des Vorderrads ist zweckmäßigerweise in Richtung hin zu dem Sitzrohr versetzt zu der Längsachse des Lenkrohrs angeordnet. Dadurch wird die Gesamtlänge der Draisine reduziert und vorzugsweise der Nachlauf vergrößert.

In einer Ausgestaltung der Erfindung ist die Hinterradachse unmittelbar oder mittels einer Halterung an dem Sitzrohr gehalten und/oder die Vorderradachse unmittelbar oder mittels einer Halterung an dem Lenkrohr gehalten.

Die Hinterradhalterung und/oder die Vorderradhalterung ist zweckmäßigerweise durch eine Aussparung, insbesondere einen Rohreinsatz, in dem Sitzrohr und/oder dem Lenkrohr oder ein Mittel zur Aufnahme der Hinterradachse und/oder Vorderradachse, insbesondere eine Lochplatte, ein Vierkantrohr und/oder ein Rundrohr gebildet.

Alternativ oder zusätzlich ist die Hinterradhalterung und/oder die Vorderradhalterung ein Ansatz, insbesondere ein Zapfen, der von dem Sitzrohr und/oder dem Lenkrohr vorsteht. Zweckmäßigerweise ist der Ansatz an dem Sitzrohr bzw. dem Lenkrohr angeordnet und liegt vorzugsweise daran an. Der Ansatz könnte eine Aussparung aufweisen, die zumindest teilweise die Form, vorzugsweise eine Negativform, einer äußeren Fläche des Sitzrohrs und/oder des Lenkrohrs hat. Zweckmäßigerweise ist eine Längsachse und/oder eine Symmetrieachse des Ansatzes identisch mit einer Rotationsachse des an dem Ansatz angeordneten Hinterrads bzw. Vorderrads. Vorzugsweise ist der Ansatz zumindest teilweise in dem an ihm angeordneten Hinterrad bzw. Vorderrad angeordnet und könnte dieses vollständig durchqueren und/oder durchragen. Der Ansatz ist zweckmäßigerweise an dem Sitzrohr und/oder Lenkrohr angeordnet derart, dass die Längsachse und/oder Symmetrieachse des Ansatzes unmittelbar an und/oder neben dem Sitzrohr und/oder Lenkrohr angeordnet ist.

In einer Ausführungsform der Erfindung ist die Hinterradachse lediglich an einer einzigen Seite des Hinterrads mittels der Hinterradhalterung an dem Sitzrohr und/oder die Vorderradachse lediglich an einer einzigen Seite des Vorderrads mittels der Vorderradhalterung an dem Lenkrohr befestigt. Dies vereinfacht die Montage und Reparatur des Hinterrads und/oder des Vorderrads und spart Gewicht. Die Anzahl der Bauteile, aus denen die Draisine gebildet ist, werden reduziert. Die Herstellungskosten können verringert werden.

In einer Ausführungsform der Erfindung weisen Außenrohre, insbesondere das Sitzrohr, das Lenkrohr und das Verbindungsohr, insbesondere das Teilrohr, das an dem Sitzrohr befestigt ist, und das Teilrohr, das an der Lenkeinheit befestigt ist, einen nahezu gleich großen Innenradius auf. Innenrohre, insbesondere die Sattelstütze, die Lenkstütze und ggf. das zumindest eine Verbinderteilrohr, könnten einen gleich großen Außenradius aufweisen. Zweckmäßigerweise weisen die Außenrohre einen Innenradius auf, der gleich dem Außenradius der Innenrohre ist oder größer ist als der Außenradius der Innenrohre. Es wird ermöglicht, die Innenrohre in den Außenrohren, vorzugweise verschiebbar, anzuordnen.

In einer Ausgestaltung der Erfindung ist in der Packstellung die Sattelstütze in einem der Teilrohre, insbesondere dem Teilrohr, das, vorzugsweise fest, an dem Sitzrohr oder der Lenkeinheit gehalten ist, angeordnet. Zweckmäßigerweise ist eines der Teilrohre, insbesondere das zumindest eine Verbinderteilrohr, in der Packstellung in dem Sitzrohr oder dem Lenkrohr angeordnet.

Das Sitzrohr und/oder das Lenkrohr könnten Mittel aufweisen, insbesondere Klammern, Bügel und/oder Schellen, zum Halten des Verbindungsrohrs, insbesondere zumindest eines der Teilrohre, der Sattelstütze und/oder der Lenkstütze.

Zweckmäßigerweise weist das Teilrohr, das an dem Sitzrohr angeordnet ist, eine derartige Länge auf, dass ein von dem Sitzrohr abgewandtes Ende des Teilrohrs höchstens bis zu einer Vertikalen, die das Hinterrad tangiert, über dem Hinterrad vorsteht. Vorzugsweise weist das Teilrohr, das an der Lenkeinheit angeordnet ist, eine derartige Länge auf, dass ein von der Lenkeinheit abgewandtes Ende des Teilrohrs höchstens bis zu einer Vertikalen, die das Vorderrad tangiert, über dem Vorderrad vorsteht.

In einer Ausgestaltung der Erfindung weist die Lenkeinheit ein Drehgelenk auf, mit dem das Lenkrohr um eine Drehachse des Drehgelenks schwenkbar oder drehbar ist.

Zweckmäßigerweise ist das Lenkrohr im Abstand zu der Drehachse des Drehgelenks an dem Drehgelenk gehalten. Dadurch wird eine Schwenkbewegung des Lenkrohrs um die Drehachse des Drehgelenks ermöglicht.

Alternativ kann das Lenkrohr zweckmäßigerweise von dem Drehgelenk gehalten werden derart, dass die Längsachse des Lenkrohrs identisch ist mit der Drehachse des Drehgelenks. Es wird ermöglicht, das Lenkrohr um seine Längsachse zu drehen.

Das Drehgelenk ist zweckmäßigerweise, insbesondere unmittelbar, mit dem der Lenkeinheit zugewandten Ende des Verbindungsrohrs oder eines der Teilrohre verbunden.

Das Lenkrohr und/oder die Lenkstütze und das Verbindungsrohr oder das mit dem Drehgelenk verbundene Teilrohr sind zweckmäßigerweise im rechten Winkel zueinander angeordnet, insbesondere in einem Winkel, der bevorzugt um maximal 12 °, besonders bevorzug um maximal 10 °, von einem rechten Winkel abweicht.

In einer Ausführungsform der Erfindung sind die Längsachse des Lenkrohrs und/oder eine Längsachse der Lenkstütze und die Drehachse des Drehgelenks im Winkel zueinander, bevorzugt < 5 °, besonders bevorzugt < 3 °, angeordnet. Zweckmäßigerweise sind die Längsachse des Lenkrohrs und/oder der Lenkstütze und die Drehachse des Drehgelenks parallel zueinander und vorzugsweise im Abstand voneinander angeordnet.

Die Drehachse des Drehgelenks und/oder die Längsachse des Lenkrohrs und/oder der Lenkstütze ist in einer Ausgestaltung der Erfindung vertikal, insbesondere lotrecht, angeordnet. Zweckmäßigerweise ist die Drehachse des Drehgelenks, die Längsachse des Lenkrohrs und/oder der Lenkstütze in einem Winkel zwischen 0° und 20 °, bevorzugt zwischen 0° und 12 °, besonders bevorzugt zwischen 4 ° und 10 °, zur Vertikalen angeordnet.

Die Drehachse des Drehgelenks ist zweckmäßigerweise in einer zur Rotationsachse des Vorderrads senkrechten Symmetrieebene des Vorderrads angeordnet. Die Drehachse des Drehgelenks könnte die Längsachse des Verbindungsrohrs oder des mit dem Drehgelenk verbundenen Teilrohrs schneiden.

Die Längsachse des Sitzrohrs ist zweckmäßigerweise vertikal, insbesondere lotrecht, angeordnet. Die Längsachse des Sitzrohrs könnte in einem Winkel zwischen 0 ° und 20 °, bevorzugt zwischen 0 ° und 10 °, besonders bevorzugt zwischen 0 ° und 5 °, zur Vertikalen angeordnet sein.

Zweckmäßigerweise sind das Sitzrohr und das Verbindungsrohr im rechten Winkel zueinander angeordnet, insbesondere in einem Winkel, der bevorzugt um maximal 10 °, besonders bevorzug um maximal 5 °, von einem rechten Winkel abweicht.

Der Sattel ist in einer Ausgestaltung der Erfindung mittig über dem Hinterrad angeordnet, vorzugsweise derart, dass eine Längsachse des Sattels in der zu der Rotationsachse des Hinterrads senkrechten Symmetrieebene des Hinterrads angeordnet ist. Dazu kann er auf dem Sitzrohr bzw. der Sattelstütze seitlich versetzt angeordnet sein. Zweckmäßigerweise weist das Sitzrohr oder die Sattelstütze einen oberen Endabschnitt auf, der zu der Lenkeinheit hin abgeknickt ist und/oder schräg zu dem Verbindungsrohr angeordnet ist derart, dass das obere Ende vertikal über dem Verbindungsrohr angeordnet ist. Es wird ermöglicht, einen Schwerpunkt eines auf dem Sattel sitzenden Fahrers der Draisine, in eine Symmetrieebene des Hinterrads, die senkrecht zu der Rotationsachse des Hinterrads ist, zu bringen und in Richtung hin zu dem Vorderrad zu verlagern. Es versteht sich, dass der Endabschnitt den Anschlag, bis zu dem die Sattelstütze in das Sitzrohr eingeschoben werden kann, bilden kann.

In einer Ausführungsform der Erfindung ist der Sattel im Bereich der Sattelspitze breiter als in einem Bereich zwischen der Sattelspitze und dem der Sattelspitze abgewandten Ende des Sattels. Zweckmäßigerweise ist die Schnittfläche senkrecht zur Längsachse des Sattels in dem Bereich der Sattelspitze größer als in dem Bereich zwischen der Sattelspitze und dem der Sattelspitze abgewandten Ende. In einer Ausgestaltung der Erfindung ist die Sattelspitze nach oben geneigt. Die vorgenannten möglichen Ausführungsformen des erfindungsgemäßen Sattels ermöglichen jeweils und in Kombination, dass die Kraft besser aufgenommen werden kann, die beim Anschieben der Draisine von einem auf dem Sattel sitzenden Fahrer ausgeht.

Die Draisine könnte lediglich ein einziges Sitzrohr, ein einziges Verbindungsrohr und/oder ein einziges Lenkrohr aufweisen.

Das Vorderrad und/oder das Hinterrad weisen vorzugsweise einen Raddurchmesser von 12 Zoll bis 20 Zoll, bevorzugt 16 Zoll bis 18 Zoll, besonders bevorzugt 18 Zoll, auf.

Zweckmäßigerweise weist die Draisine Mittel auf, die eine Verdrehung der Teilrohre gegeneinander, des Sitzrohrs und der Sattelstütze gegeneinander und/oder des Lenkrohrs und der Lenkstütze gegeneinander verhindern und/oder die Länge des Verbindungsrohrs, die Sattelhöhe und/oder die Lenkerhöhe fixieren und vorzugsweise eine stufenweise Änderung der Länge ermöglichen. Entsprechende Mittel können bspw. Bolzen, Schrauben, Rillen und/oder Kanten mit korrespondierenden Aussparungen, Anschläge mit korrespondierenden Gegenanschlägen und/oder Klemmen sein. Vorzugsweise sind die Bolzen an einem Rückstellmittel angeordnet, das die Bolzen in den Aussparungen hält.

In einer Ausgestaltung der Erfindung weist die Draisine zumindest eine Klemme auf, die an dem Verbindungsrohr angeordnet ist und mittels derer sich die Teilrohre aneinander fixieren lassen. Die Klemme weist zweckmäßigerweise eine Klemmschelle auf, die eines der Teilrohre umgreift und vorzugsweise vollständig an dem Teilrohr anliegt. Zur Spannung der Klemmschelle könnte die Klemme ein Klemmmittel aufweisen, das vorzugsweise über einen Eckbereich des umgriffenen Teilrohrs greift, das vorzugsweise einen rechteckigen oder dreieckigen Querschnitt ausweist. Zweckmäßigerweise verbindet das Klemmmittel zwei Seitenteile der Klemmschelle, die vorzugsweise einen Winkel von 45 ° bis 135 °, bevorzugt einen Winkel von 90 °, aufspannen. Es wird dadurch möglich, die Spannkräfte besonders gleichmäßig über den Umfang des eingespannten Teilrohrs zu verteilen.

Zweckmäßigerweise weist das durch die Klemmen umgriffene Teilrohr in dem Eckbereich, über den das Klemmmittel greift, einen in Längsrichtung des Teilrohrs gebildeten Spalt auf. Dadurch kann der Umfang des umgriffenen Teilrohrs mittels der Klemme verringert werden und somit ein in dem umgriffenen Teilrohr angeordnetes Teilrohr und/oder Endteil eingeklemmt werden.

Zur leichteren Verschiebbarkeit von ineinander angeordneten Rohren zueinander, insbesondere den Endteilen und/oder Teilrohren zu den Teilrohren, kann zwischen Rohren eine Gleitschicht und/oder eine Gleitauflage gebildet sein.

Die Draisine könnte lediglich eine einzige Bremse umfassen, insbesondere eine Felgen- und/oder Scheibenbremse, die ausschließlich zum Abbremsen des Hinterrads vorgesehen und vorzugsweise an dem Verbindungsrohr oder Sitzrohr angeordnet ist. Da der Schwerpunkt des Systems aus Draisine und Fahrer näher an dem Hinterrad als an dem Vorderrad liegt, hat es sich als vorteilhaft erwiesen, die Bremse lediglich am Hinterrad vorzusehen.

Zweckmäßigerweise weist das Vorder- und/oder das Hinterrad einen Antrieb, vorzugsweise einen Nabenmotor, auf. Der Antrieb könnte frei von einer Tretkurbel sein.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: eine erfindungsgemäße Draisine in einer Komfort- und Kompaktfahrstellung,
- Fig. 2: eine weitere Sattelstütze der Draisine nach Fig. 1,
- Fig. 3: eine weitere Hinter- und/oder Vorderradhalterung der Draisine nach Fig. 1,
- Fig. 4: die in Fig. 1 gezeigte Draisine in einer Packstellung,
- Fig. 5: eine weitere erfindungsgemäße Draisine,
- Fig. 6: eine weitere erfindungsgemäße Draisine in einer Komfort- und Kompaktfahrstellung,
- Fig. 7: die in Fig. 6 gezeigte Draisine in zwei unterschiedlichen Packstellungen,
- Fig. 8 und 9: eine Detailansicht eines Verbindungsrohrs der Draisine nach Fig. 6,
- Fig. 10: eine Detailansicht einer Klemme zur Arretierung des in Fig. 8 und 9 gezeigten Verbindungsrohrs und
- Fig. 11: eine Detailansicht einer Halterung eines Hinterrads an einem Sitzrohr mittels eines Ansatzes.

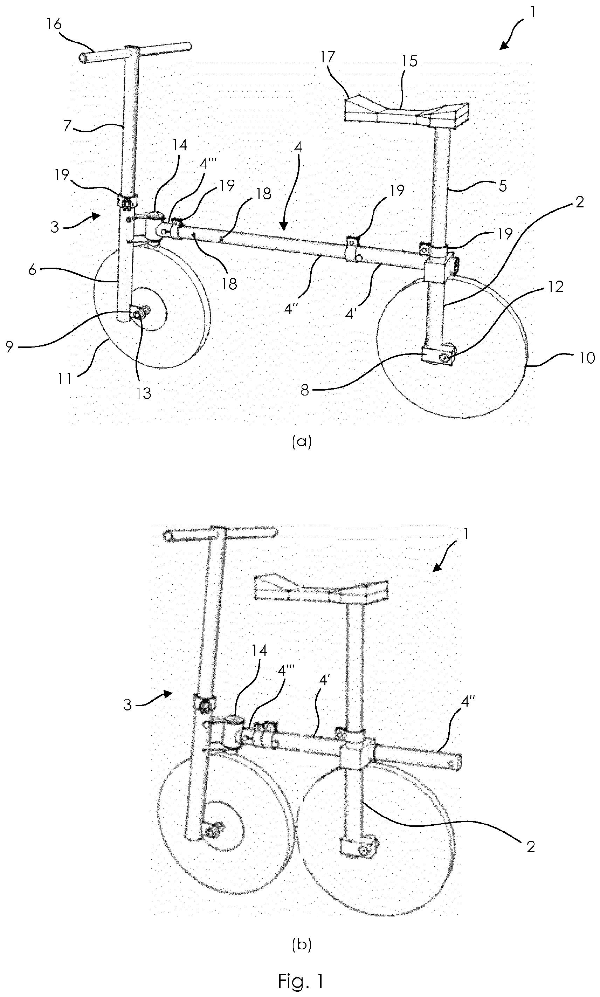

Fig. 1 zeigt eine erfindungsgemäße Draisine 1, die ein geradliniges Sitzrohr 2 und eine Lenkeinheit 3 umfasst. Das Sitzrohr 2 und die Lenkeinheit 3 sind über ein Verbindungsrohr 4 miteinander verbunden und das Sitzrohr 2 ist zu dem Verbindungsrohr 4 versetzt angeordnet. Das Sitzrohr 2 und das Verbindungsrohr 4 sind im rechten Winkel zueinander angeordnet.

Die Länge des Verbindungsrohrs 4 ist in Fig. 1(a) so gewählt, dass der Abstand zwischen einer Rotationsachse eines Hinterrads 10 und einer Rotationsachse eines Vorderrads 11 bspw. das 1,6-fache der Summe der Radien des Hinterrads 10 und des Vorderrads 11 ist. Dadurch ist die Draisine 1 nach Fig. 1(a) in einer Komfortfahrstellung angeordnet.

In dem Sitzrohr 2 ist eine geradlinige Sattelstütze 5 verschiebbar angeordnet, an der ein Sattel 15 befestigt ist.

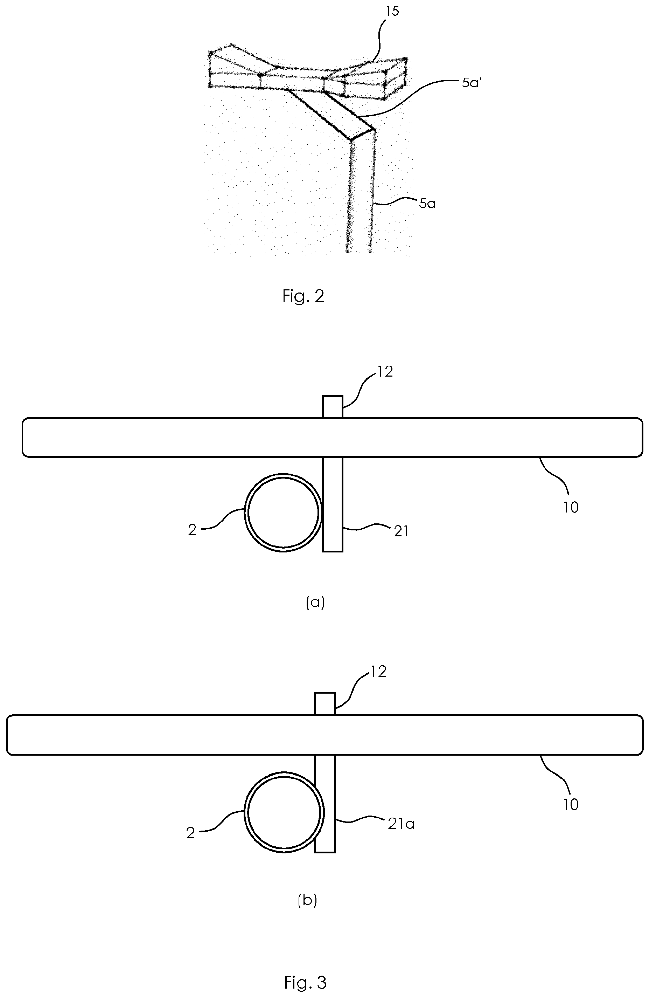

Es könnte ferner eine in Fig. 2 gezeigt Sattelstütze 5a vorgesehen werden, deren oberer Endabschnitt 5a'zu der Lenkeinheit 3 hin abgeknickt ist und optional schräg zum Verbindungsrohr 4 angeordnet ist derart, dass das obere Ende vertikal über dem Verbindungsrohr 4 angeordnet ist.

Dadurch wird ein Schwerpunkt eines auf dem Sattel 15 sitzenden Fahrers der Draisine 1 in Richtung hin zum Vorderrad 11 und in die Symmetrieebene des Hinterrads 10, die senkrecht zu dessen Rotationsachse ist, gebracht. Ferner ist an dem Sitzrohr 2 unmittelbar eine Halterung 8 für das Hinterrad 10 befestigt derart, dass die Rotationsachse des Hinterrades 10 versetzt ist zu einer Längsachse des Sitzrohrs 2 in Richtung weg von der Lenkeinheit 3. In der gezeigten Ausführungsform ist die Hinterradhalterung 8 ein von dem Sitzrohr 2 vorstehendes Vierkantrohr, könnte allerdings auch ein andersartiger Ansatz, insbesondere ein Zapfen, eine Platte oder ein Rundrohr sein.

Die Lenkeinheit 3 umfasst ein geradliniges Lenkrohr 6, in dem zumindest teilweise eine geradlinige Lenkstütze 7 verschiebbar angeordnet ist. An der Lenkstütze 7 ist ein Lenker 16 gehalten. Ferner ist unmittelbar an dem Lenkrohr 6 eine Halterung 9 für das Vorderrad 11 befestigt mittels der die Rotationsachse des Vorderrads 11 in Richtung hin zu dem Sitzrohr 2 versetzt ist zu einer Längsachse des Lenkrohrs 6. In der gezeigten Ausführungsform ist die Vorderradhalterung 9 eine von dem Lenkrohr 6 vorstehende Platte, könnte allerdings auch ein andersartiger Ansatz sein.

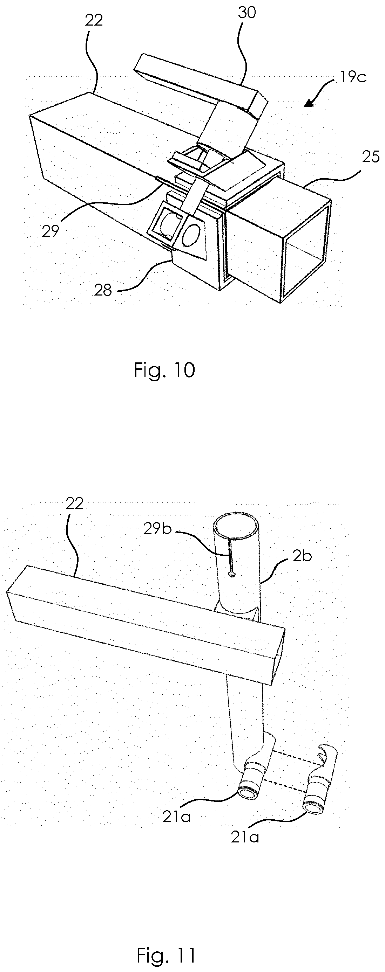

Anstatt das Hinterrad 10 mittels der Hinterradhalterung 8 an dem Sitzrohr 2 und das Vorderrad 11 mittels der Vorderradhalterung 9 an dem Lenkrohr 6 zu halten, könnte eine Radachse 12 des Hinterrads 10 unmittelbar an dem Sitzrohr 2 oder eine Radachse 13 des Vorderrads 11 unmittelbar an dem Lenkrohr 6 befestigt sein. Ferner könnte die Hinterradachse 12 und/oder die Vorderradachse 13 einen Ansatz 21;21a aufweisen. Die in Fig. 3 gezeigten Ansätze 21;21 a sind unmittelbar an dem Sitzrohr 2 befestigt. Der in Fig. 3(b) gezeigte Ansatz 21a weist eine Aussparung auf, die das Sitzrohr 2 zumindest teilweise umgreift wie ferner in der Detailansicht nach Fig. 11 gezeigt, wobei der Ansatz 21a an einem alternativen Sitzrohr 2b angeordnet ist. Das Sitzrohr 2b unterscheidet sich von dem Sitzrohr 2 dadurch, dass es in einem Endbereich einen in Längsrichtung verlaufenden Spalt 29b aufweist, der die Aufweitung des Sitzrohrs 2b ermöglicht und somit eine hier nicht gezeigte Sattelstütze einfacher in dem Sitzrohr 2b verschoben werden kann. Der Ansatz 21a könnte an dem Sitzrohr 2,2b befestigt sein, bspw. durch Schweißen. In Fig. 3 ist zwar lediglich die Halterung des Hinterrads 10 an dem Sitzrohr 2 mittels des Ansatzes 21,21a gezeigt, es versteht sich aber, dass die Ansätze 21,21a in gleicher Weise als Halterung des Vorderrads 11 an dem Lenkrohr 6 angeordnet sein können. Es versteht sich, dass anstatt oder zusätzlich zu dem in dem Sitzrohr 2b vorgesehenen Spalt 29b ein in gleicher Weise ausgeführter Spalt in einem in Fig. 11 nicht gezeigten Lenkrohr vorgesehen sein könnte.

Die Hinterradachse 12 und die Vorderradachse 13 sind lediglich an einer einzigen Seite des jeweiligen Rades 10,11 mittels der Hinterradhalterung 8 bzw. der Vorderradhalterung 9 gehalten.

Das Verbindungsrohr 4 ist über ein Drehgelenk 14 mit dem Lenkrohr 6 verbunden. In dem vorliegenden Beispiel ist das Lenkrohr 6 im Abstand von dem Drehgelenk 14 gehalten und dadurch um eine Drehachse des Drehgelenkes 14 schwenkbar. Alternativ könnte das Lenkrohr 6 mittels des Drehgelenkes 14 um die Drehachse des Drehgelenks 14 drehbar gelagert sein, wenn die Längsachse des Lenkrohrs 6 mit der Drehachse des Drehgelenks 14 identisch ist. Ferner ist in dem Ausführungsbeispiel die Längsachse des Lenkrohrs 6 parallel zu der Drehachse des Drehgelenks 14, könnte aber auch im Winkel zu der Drehachse des Drehgelenks 14 angeordnet sein.

Die Länge des Verbindungsrohrs 4 ist teleskopartig verstellbar. Dazu ist das Verbindungsrohr 4 aus mehreren Teilrohren 4',4",4‴ gebildet, wobei das Teilrohr 4' an dem Sitzrohr 2 und das Teilrohr 4‴ an dem Drehgelenk 14 befestigt ist. Das Teilrohr 4" bildet ein Verbinderteilrohr 4", das innerhalb der Teilrohre 4',4‴ angeordnet ist und die Teilrohre 4',4‴ verbindet. Das Verbinderteilrohr 4" kann, wie in Fig. 1(b) gezeigt, über das Sitzrohr 2 hinaus durch das Teilrohr 4' geschoben werden. In diesem Fall ist die Draisine 1 in einer Kompaktfahrstellung angeordnet, in der die Draisine 1 auf besonders wendig und platzsparend ist. Wenn das Verbindungsrohr 4 aus einem einzigen Rohr gebildet ist, kann das Verbindungsrohr 4 in gleicher Weise wie das Verbinderteilrohr 4" über das Sitzrohr 2 hinausragen.

Der Abstand zwischen Rotationsachsen des Hinterrads 10 und des Vorderrads 11 ist bspw. das 1,02-fache der Summe der Radien des Hinterrads 10 und des Vorderrads 11. Ist das Verbindungsrohr 4 aus einem einzigen Rohr gebildet, könnte das Verbindungsrohr 4 eine Länge aufweisen, mittels der der Abstand zwischen den Rotationsachsen des Hinterrads 10 und des Vorderrads 11 dem obigen entspricht. Zum Wechsel zwischen der Kompaktfahrstellung und der Komfortfahrstellung kann das Verbindungsrohr 4 ausgetauscht werden oder die Länge des Verbindungsrohrs 4, wie in Fig. 1 gezeigt, geändert werden. Alternativ oder zusätzlich kann das Sitzrohr 2 oder die Lenkeinheit 3 in Richtung einer Längsachse des Verbindungsrohrs 4 entlang des Verbindungsrohrs 4 verschoben werden, um so den Abstand zwischen den Rotationsachsen des Hinterrads 10 und des Vorderrads 11 zu ändern.

Damit sich die Teilrohre 4',4",4‴ und dadurch das Sitzrohr 2 und die Lenkeinheit 3 nicht gegeneinander verdrehen können, weisen die Teilrohre 4',4",4‴ Bolzen und korrespondierende Aussparungen 18 auf. Ferner könnten die Teilrohre 4',4",4‴ Führungsrillen mit korrespondierenden Gegenstücken aufweisen. Zur weiteren Fixierung der Teilrohre 4',4",4‴ sind Klemmen 19 vorgesehen. Die Teilrohre 4',4‴ weisen in den Endbereichen, an denen die Klemmen 19 angeordnet sind, Längsschlitze auf, dank derer das Verbinderteilrohr 4" mittels der Klemmen 19 eingeklemmt oder eingeschnürt werden kann. Mittels der Bolzen und Aussparungen 18 sowie der Klemmen 19 kann der Abstand zwischen dem Sitzrohr 2 und der Lenkeinheit 3 stufenweise eingestellt und fixiert werden. Insbesondere in der Kompaktfahrstellung könnte der Abstand zwischen dem Sitzrohr 2 und der Lenkeinheit 3 auch durch die Längen der Teilrohre 4',4‴ vorgegeben werden indem sich gegenüberliegende Grundflächen der Teilrohre 4',4‴ in der Kompaktfahrstellung aneinander anliegen.

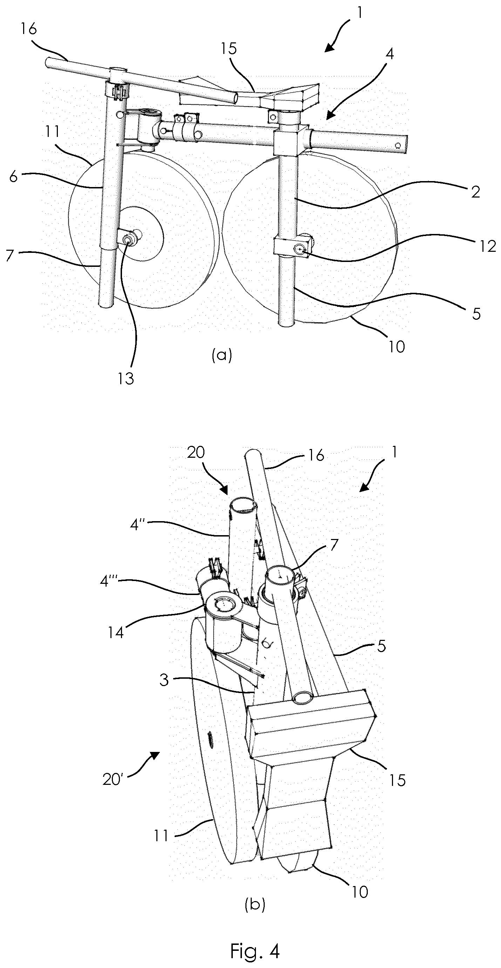

Weil die Rotationsachse des Vorderrades 11 zu der Längsachse des Lenkrohrs 6 und die Rotationsachse des Hinterrads 10 zu dem Sitzrohr 2 versetzt ist, können beim Absenken des Sattels 15 und des Lenkers 16, die Sattelstütze 5 und die Lenkstütze 7 an der Hinterradachse 12 bzw. der Vorderradachse 13 vorbeigeführt werden. Dadurch wird die Draisine 1;1a in der in Fig. 4(a) lediglich für die Draisine 1 nach Fig. 1 gezeigten Packstellung angeordnet. Der Sattel 15 und der Lenker 16, bzw. eine hier nicht gezeigte Sattelhalterung oder Lenkerhalterung, bilden Anschläge für die Einschubtiefe der Sattelstütze 5 in das Sitzrohr 2 und der Lenkstütze 7 in das Lenkrohr 6. Die Sattelstütze 5 ragt mit einem Ende aus dem Sitzrohr 2 heraus, das dem zur Aufnahme des Sattels 15 vorgesehenen Ende abgewandt ist, und die Lenkstütze 7 ragt mit einem Ende aus dem Lenkrohr 6 heraus, das dem zur Aufnahme des Lenkers 16 vorgesehenen Ende abgewandt ist.

Das Verbindungsrohr 4 kann derart mit dem Sitzrohr 2 verbunden sein, dass das Verbindungsrohr 4 bei Reduzierung des Abstands zwischen den Rotationsachsen des Hinterrads 10 und des Vorderrads 11 über das Sitzrohr 2 hinausragt. Ferner kann das Lenkrohr 6 gegen die Lenkstütze 7 verdreht angeordnet werden, sodass die Längsachse des Lenkers 16 parallel ist zu einer zur Rotationsachse des Vorderrads 11 senkrechten Symmetrieebene des Vorderrads 11.

In Fig. 4(b) ist eine weitere Packstellung gezeigt, in der das Verbindungsrohr 4 nicht wie in Fig. 4(a) gezeigt über das Sitzrohr 2 hinausragt, sondern bei der das hier nicht gezeigte Verbindungsrohr 4;4a von dem Drehgelenk 14 und dem Sitzrohr 2 gelöst ist, bzw. das Verbinderteilrohr 4" aus den Teilrohren 4',4‴ genommen ist. Dadurch ergeben sich zwei getrennte Baugruppen 20,20', die zum Packen aneinandergelegt und mittels hier nicht gezeigter Magnete aneinander befestigt werden können. Die Baugruppe 20 umfasst u.a. das Sitzrohr 2 und das Hinterrad 10. Die Baugruppe 20' umfasst u.a. die Lenkeinheit 3.

Die Sattelstütze 5 ist aus dem Sitzrohr 2 entfernt und in das in Fig. 4(b) nicht sichtbare Teilrohr 4' gesteckt. Ferner könnte die Sattelstütze 5 mittels hier nicht gezeigter Rohrschellen an der Außenseite des Sitzrohrs 2 und/oder des Lenkrohrs 6 gehalten sein. Alternativ oder zusätzlich könnte die Sattelstütze 5 auch in dem an dem Drehgelenk 14 befestigtem Teilrohr 4‴ oder dem hier nicht sichtbaren Teilrohr 4' gehalten sein, das an dem Sitzrohr 2 befestigt ist.

Die Lenkstütze 7 ist, wie bereits in Fig. 4(a) gezeigt, bis zu einem Anschlag in das Lenkrohr 6 geschoben und gegen das Lenkrohr 6 verdreht, sodass eine Längsachse des Lenkers 16 parallel zu der zur Rotationsachse des Vorderrads 11 senkrechten Symmetrieebene des Vorderrads 11 angeordnet ist. Alternativ kann die Lenkstütze 7 aus dem Lenkrohr 6 entfernt und wie die Sattelstütze 5 an den Baugruppen 20,20' angeordnet werden.

Das aus den Teilrohren 4',4‴ entnommene Verbinderteilrohr 4" ist in dem in Fig. 4(b) nicht sichtbaren Sitzrohr 2 angeordnet, könnte ebenfalls mit nicht gezeigten Haltevorrichtungen an den Baugruppen 20,20' gehalten sein.

In der in Fig. 4(b) dargestellten weiteren Packstellung sind die zu den jeweiligen Rotationsachsen des Hinterrads 10 und des Vorderrads 11 senkrechten Symmetrieebenen des Hinterrads 10 und des Vorderrads 11 gegenüberliegend zueinander angeordnet. Zwischen dem Hinterrad 10 und dem Vorderrad 11 sind u.a. das Lenkrohr 6 und das Sitzrohr 2 angeordnet.

Die Draisine 1 weist Klemmen 19 auf, die an dem Sitzrohr 2 und dem Lenkrohr 6 anliegen und die Sattelstütze 5 bzw. die Lenkstütze 7 haltend umgreifen. Dadurch kann eine Höhe des Sattels 15 und des Lenkers 16 fixiert werden.

Der Sattel 15 ist in dem Bereich der Sattelspitze 17 nach oben geneigt und breiter als in einem Bereich zwischen der Sattelspitze 17 und dem der Sattelspitze 17 abgewandten Ende des Sattels 15.

Ferner weist die Draisine 1 eine hier nicht gezeigte Felgenbremse zum Abbremsen des Hinterrads 10 auf, die an dem Teilrohr 4' angeordnet ist. Alternativ wäre vorstellbar, an dem Sitzrohr 2 eine Scheibenbremse vorzusehen.

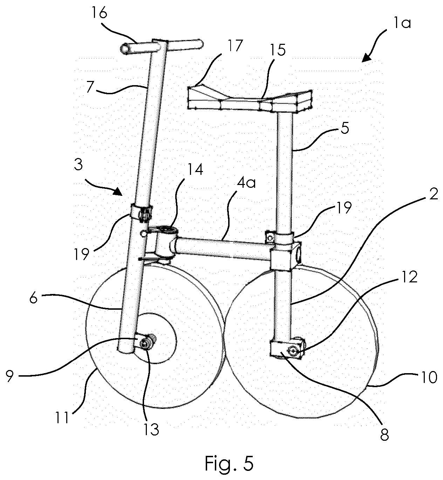

In Fig. 5 ist eine weitere erfindungsgemäße Draisine 1a gezeigt, die im Vergleich zu der Draisine 1 aus Fig. 1 anstelle des teleskopartig verstellbaren Verbindungsrohrs 4 ein in seiner Länge festes Verbindungsrohr 4a aufweist, das an dem Drehgelenk 14 und dem Sitzrohr 2 befestigt ist. Das Verbindungsrohr 4a ist so lang, dass der Abstand zwischen der Hinterradachse 12 und der Vorderradachse 13 bspw. dem 1,05-fachen der Summe des Radius des Hinterrads 10 und des Vorderrads 11 entspricht. Dadurch ist die Draisine 1a in der Kompaktfahrstellung angeordnet. Alternativ kann die Länge des Verbindungsrohrs 4a so gewählt werden, dass der Abstand zwischen der Hinterradachse 12 und der Vorderradachse 13 bspw. das 1,5-fache der Summe der Radien des Hinterrads 10 und des Vorderrads 11 beträgt. Dadurch ist die Draisine 1a in der Komfortfahrstellung angeordnet.

Um zwischen der Kompaktfahrstellung und der Komfortfahrstellung zu wechseln oder den Abstand zwischen den Rotationsachsen des Hinterrads 10 und des Vorderrads 11 zu ändern, ist das Verbindungsrohr 4a abnehmbar. Ferner könnte die Position des Sitzrohrs 2 und/oder der Lenkeinheit 3 entlang des Verbindungsrohrs 4a veränderbar sein.

Es versteht sich, dass die in Fig. 4 gezeigten Packstellungen auch für die Draisine 1a nach Fig. 5 denkbar sind.

Um die Draisine 1a in der in Fig. 4(b) gezeigten weiteren Packstellung anzuordnen, wird das Verbindungsrohr 4a von dem Drehgelenk 14 und dem Sitzrohr 2 gelöst und an den Baugruppen 20,20' gehalten oder in dem Sitzrohr 2 angeordnet, sofern die Sattelstütze 5 wie in Fig. 4(b) gezeigt, entfernt wurde. Alternativ könnte das Verbindungsrohr 4a lediglich von dem Drehgelenk oder dem Sitzrohr 2 gelöst sein.

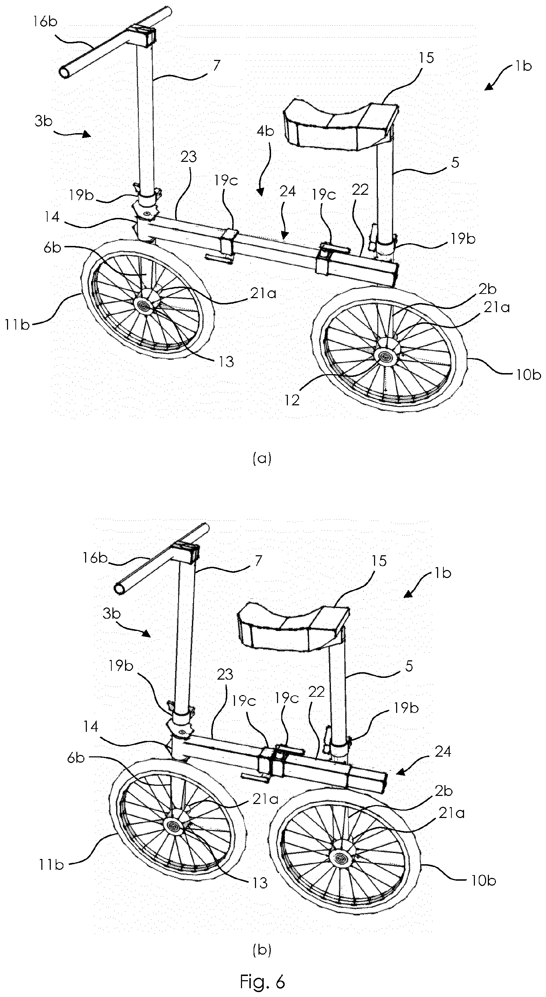

Anstatt das Verbindungsrohr 4;4a zu lösen, könnte das Verbindungsrohr 4;4a ein Scharnier oder/und ein Gelenk aufweisen, um die Draisine 1;1a in die Packstellung nach Fig. 4(b) zu versetzen. Eine Draisine 1b mit einem derartigen Verbindungsrohr 4b ist in Fig. 6 gezeigt.

Die Draisine 1b weist im Unterschied zu den Draisinen 1,1a ein Verbindungsrohr 4b auf, das aus zwei Teilrohren 22,23 und einem Verbinderteilrohr 24 gebildet ist. In der gezeigten Ausführungsform ist das Teilrohr 22 fest, bspw. durch Schweißen, mit dem Sitzrohr 2b und das Teilrohr 23 fest mit dem Drehgelenk 14 verbunden. Die Teilrohre 22,23 könnten allerdings auch jeweils lösbar an dem Sitzrohr 2b bzw. Drehgelenk 14 befestigt sein.

Die Teilrohre 22,23 sind jeweils aus Rohren mit einem quadratischen Querschnitt gebildet, könnten allerdings auch einen anderen eckigen, ovalen oder kreisrunden Querschnitt aufweisen. Es versteht sich, dass auch die Teilrohre 4',4",4‴ und die Verbindungsrohre 4;4a einen eckigen, ovalen oder kreisrunden Querschnitt aufweisen können.

Die Draisine 1b kann durch Verschiebung der Teilrohre 22,23 relativ zu dem Verbinderteilrohr 24 von einer in Fig. 6(a) gezeigten Komfortfahrstellung in eine in Fig. 6(b) gezeigte Kompaktfahrstellung versetzt werden und umgekehrt. Um das Verbindungsrohr 4b in der jeweiligen Fahrstellung festzustellen, weist die Draisine 1b Klemmen 19c auf, die mittels eines Spannhebels geöffnet und geschlossen werden können. Dadurch kann die Position des Verbinderteilrohrs 24 relativ zu den Teilrohren 22,23 fixiert werden.

Um das Verbinderteilrohr 24 einfacher in den Teilrohren 22,23 verschieben zu können, ist auf der der Innenseite der Teilrohre 22,23 zugewandten Oberfläche des Verbinderteilrohrs 24 eine Gleitschicht gebildet.

Die Draisine 1b umfasst einen Lenker 16b, der sich von dem Lenker 16 dadurch unterscheidet, dass er einen Vorbau aufweist, mittels dessen der Lenker 16 im Abstand zu der Lenkstütze 7 gehalten ist. Es versteht sich, dass der Vorbau auch ein ]Bestandteil der Lenkstütze 7 oder ein individuelles Bauteil bilden könnte. Ferner könnte anstatt des Lenkers 16b der Lenker 16 vorgesehen sein und umgekehrt.

Alternativ zu den Ausführungen der Draisinen 1,1a sind sowohl ein Hinterrad 10b als auch ein Vorderrad 11b mittels Ansätzen 21a auf der in Fahrtrichtung gesehen linken Seite von dem Sitzrohr 2b bzw. einem Lenkrohr 6b angeordnet. Es versteht sich, dass die Räder auch auf der in Fahrtrichtung gesehen rechten Seite der jeweiligen Rohre gehalten sein könnten.

Das Hinterrad 10b und das Vorderrad 11b sind hier als Laufräder mit Speichen und darauf montierten Gummireifen gebildet, könnten allerdings auch in einer anderen Weise gebildet sein.

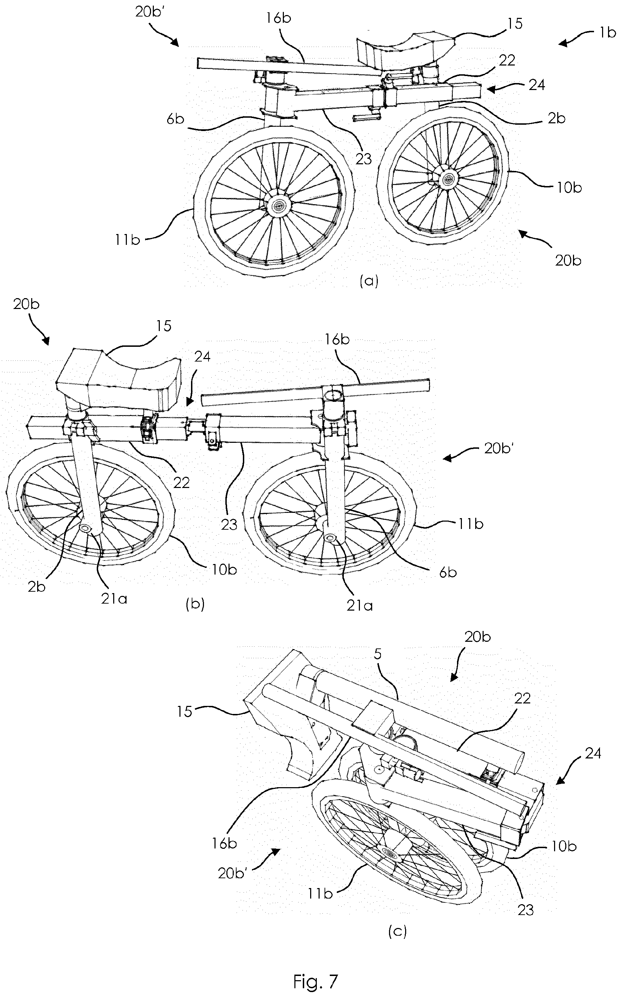

In Fig. 7(a) ist die Draisine 1b in einer ersten Packstellung gezeigt, in der das Verbindungsrohr 4b in der Kompaktfahrstellung angeordnet und die Lenkstütze 7 in dem Lenkrohr 6b verdreht ist derart, dass eine Längsachse des Lenkers 16b in Richtung einer Längsachse des Verbindungsrohrs 4b ausgerichtet ist.

Um das Packmaß der Draisine 1b weiter zu reduzieren, kann diese in einer zweiten Packstellung angeordnet werden, die in Fig. 7(c) gezeigt ist. Zusätzlich zu der in der oben beschriebenen ersten Packstellung vorgenommenen Anordnung ist in der zweiten Packstellung das Verbindungsrohr 4b mittels des Verbinderteilrohrs 24 geklappt, sodass Baugruppen 20b,20b' aneinander liegend angeordnet werden können. Die Baugruppe 20b umfasst u.a. das Sitzrohr 2b und das Hinterrad 10b. Die Baugruppe 20b' umfasst u.a. das Lenkrohr 6b und das Vorderrad 11b. Im Vergleich zu der in Fig. 4(b) gezeigten zweiten Packstellung in der die Baugruppen 20,20' getrennt werden bevor sie aneinandergelegt werden, sind die beiden Baugruppen 20b,20b' mittels des Verbinderteilrohrs 24 miteinander verbunden.

Die Sattelstütze 5 ist vollständig aus dem Sitzrohr 2b herausgezogen und an der Außenseite des Teilrohrs 22 angeordnet. Die Draisine 1b weist hier nicht gezeigte Magnete zum Halten der Sattelstütze 5 an dem Teilrohr 22 auf. Alternativ oder zusätzlich könnte die Draisine 1b andersartige Haltemittel, z.B. Schellen oder dergleichen, aufweisen.

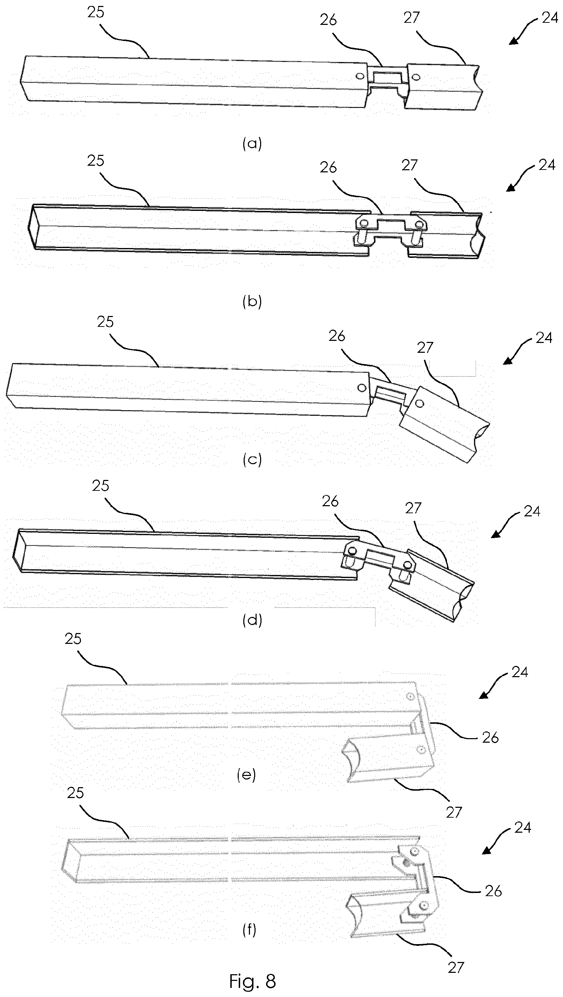

Fig. 7(b) zeigt eine Zwischenstellung, über welche von der ersten Packstellung in die zweite Packstellung gelangt werden kann. Dabei ist das in Fig. 8 in einer Detailansicht gezeigte Verbinderteilrohr 24 teilweise aus dem Teilrohr 22 herausgezogen, sodass ein Gelenkteil 26 des Verbinderteilrohrs 24 freigelegt ist.

Wie in Fig. 8 gezeigt, ist das Verbinderteilrohr 24 aus zwei Endteilen 25,27 und dem Gelenkteil 26 gebildet. Die Endteile 25,27 sind in dem gezeigten Ausführungsbeispiel in der Form von Rohren mit quadratischem Querschnitt gebildet, könnten allerdings auch einen ovalen, kreisrunden oder rechteckigen Querschnitt aufweisen. Das Endteil 27 weist ferner an einem von dem Gelenkteil 26 abgewandten Ende eine Aussparung in der Form eines Kreisabschnitts auf dessen Radius einem Außenradius des Drehgelenks 14 entspricht. Dadurch kann das Endteil 27 besonders gut an dem Drehgelenk 14 abgestützt werden. Es versteht sich, dass die Aussparung optional ist und das Endteil 27 eine andersartig geformte Aussparung oder gar keine Aussparung aufweisen könnte.

Ferner weisen die beiden Endteile 25,27 unterschiedliche Längen auf, wobei in der gezeigten Ausführungsform das Endteil 25 länger ist als das Endteil 27. Die Endteile 25,27 könnten auch dieselbe Länge aufweisen oder das Endteil 27 könnte länger sein als das Endteil 25.

Das Gelenkteil 26 ist jeweils mit einem Ende der Endteile 25,27 verbunden derart, dass zwischen dem Gelenkteil 26 und den Endteilen 25,27 jeweils ein Gelenk gebildet ist. Dadurch weist das Verbinderteilrohr 24 ein Doppelgelenkt auf, mittels dessen das Verbinderteilrohr 24 umgeklappt werden kann, wie in Fig. 8(c) - (f) gezeigt. In der in Fig. 8(e) und 8(f) gezeigten Stellung des Verbinderteilrohrs 24 kann die Draisine 1b in der oben beschriebenen zweiten Packstellung nach Fig. 7(c) angeordnet werden, in der die Endteile 25,27 seitlich an dem Gelenkteil 26 anschlagen.

In Fig. 8(a), 8(c) und 8(e) ist das Verbinderteilrohr 24 in verschiedenen Stellungen gezeigt. Die Fig. 8(b), 8(d) und 8(f) zeigen jeweilig entsprechende Schnittansichten des Verbinderteilrohrs 24.

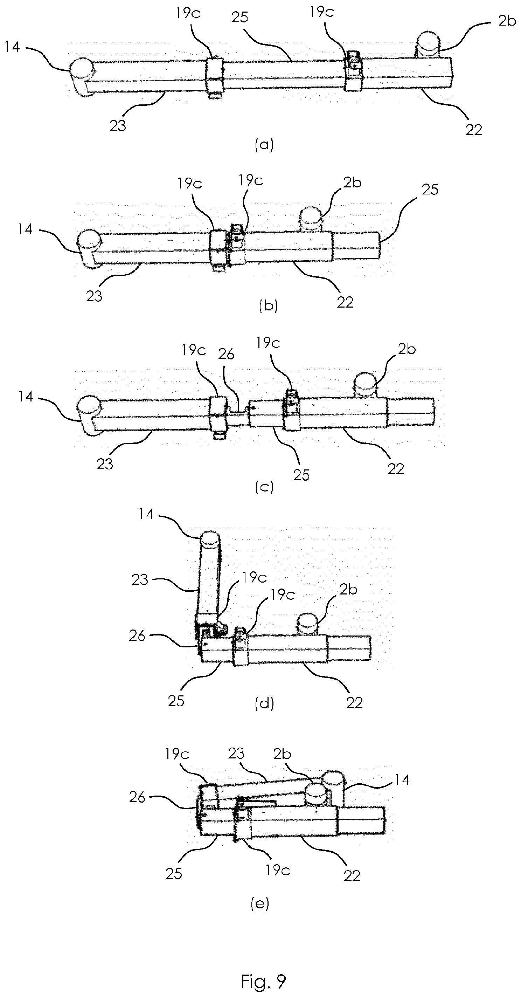

Um zu verdeutlichen, wie das Verbindungsrohr 4b in den einzelnen Stellungen angeordnet werden kann, ist in Fig. 9 das Verbindungsrohr 4b ausgeschnitten aus der Draisine 1b dargestellt, wobei das mit dem Drehgelenk 14 über das Verbindungsrohr 4b verbundene Sitzrohr 2b angedeutet ist.

In Fig. 9(a) ist die Draisine 1b in der oben beschriebenen Komfortfahrstellung angeordnet. In dieser Stellung ist das Endteil 25 des Verbinderteilrohrs 24 sowohl in dem Teilrohr 22 als auch in dem Teilrohr 23 mittels der Klemmen 19c eingeklemmt. Das Gelenkteil 26 und Endteil 27 sind innerhalb des Teilrohrs 23 angeordnet, wobei das Endteil 27 mit der Aussparung an dem Drehgelenk 14 anliegt.

Soll die Draisine 1b in der oben beschriebenen Kompaktfahrstellung oder ersten Packstellung angeordnet werden, werden die Klemmen 19c gelöst und die Baugruppen 20,20' bzw. die Teilrohre 22,23 aufeinanderzubewegt in Richtung der Längsachse des Verbindungsrohrs 4b bis diese mit ihren Enden aneinander anliegen. Anschließend werden die Klemmen 19c wieder gespannt, sodass die Teilrohre 22,23 an dem Endteil 25 gehalten sind. Das Endteil 25 ragt in dieser in Fig. 8(b) gezeigten Stellung aus einem offenen Ende des Teilrohrs 22 heraus.

Um die Draisine 1b in der zweiten Packstellung anzuordnen, wird zunächst das Gelenkteil 26 gemäß Fig. 8(c) freigelegt. Dabei wird das Endteil 27 mittels einer der Klemmen 19c in dem Teilrohr 23 festgeklemmt und das Teilrohr 22 von dem Teilrohr 23 wegbewegt zumindest um die Länge des Gelenkteils 26. Das Endteil 25 wird mittels der anderen Klemme 19c in dem Teilrohr 22 gehalten. Jetzt kann das Verbindungsrohr 4b, wie in Fig. 9(d) und 9(e) gezeigt, mittels des Doppelgelenks gebildet aus den beiden Gelenken zwischen den Endstücken 25,27 und dem Gelenkteil 26 umgeklappt werden. Wird das Verbindungsrohr 4b, wie in Fig. 9(e) gezeigt, vollständig umgeklappt, sodass die Endteile 25,27 an dem Gelenkteil 26 anschlagen, kann die Draisine 1b in die zweite Packstellung gebracht werden.

In Fig. 10 ist eine Detailansicht der Klemme 19c gezeigt. Die Klemme 19c umfasst eine Klemmschelle 28, der an dem Teilrohr 22 von außen anliegt, und einen Spannhebel 30. Durch Drehen des Spannhebels 30, der zwei Seitenteile der Klemmschelle 28, die einen Winkel von 90 ° aufspannen, miteinander verbindet, kann die Klemmschelle 28 gespannt werden, wodurch das von der Klemmschelle 28 umgriffene Teilrohr 22 auf das in dem Teilrohr 22 angeordnete Endteil 25 gepresst wird. Um die Verformung des umgriffenen Teilrohrs 22 zu unterstützen, weist das Teilrohr 22 einen in Längsrichtung des Teilrohrs 22 verlaufenden Spalt 29 auf, dessen Breite reduziert wird, sobald die Klemmschelle 28 mittels des Spannhebels 30 gespannt wird. Der Spalt 29 ist in einem Eckbereich des Teilrohrs 22 gebildet, über den der Spannhebel 30 greift. In gleicher Weise könnte auch das Teilrohr 23 einen Spalt 29 aufweisen. Es versteht sich, dass anstatt der Klemme 19c auch eine andersartige Vorrichtung zur Verklemmung des Verbinderteilrohrs 24 in den Teilrohren 22,23 vorgesehen sein kann, bspw. in der Form der Klemmen 19.

## Patentansprüche

1. Draisine (1;1a), insbesondere ein Laufrad, die ein geradliniges Sitzrohr (2), eine Einheit (3) zum Lenken der Draisine (1;1a) und ein Rohr (4;4a) zur Verbindung des Sitzrohrs (2) und der Lenkeinheit (3) umfasst, wobei das Sitzrohr (2) und das Verbindungsrohr (4;4a) zueinander versetzt angeordnet sind,
**dadurch gekennzeichnet,**
**dass** eine Längsachse des Verbindungsrohrs (4;4a) in einer zu einer Rotationsachse eines Hinterrads (10) der Draisine (1;1a) senkrechten Symmetrieebene des Hinterrads (10) angeordnet ist.

2. Draisine (1;1a) nach Anspruch 1,
**dadurch gekennzeichnet,**
**dass** das Verbindungsrohr (4;4a) abnehmbar ist.

3. Draisine (1;1a) nach Anspruch 1 oder 2,
**dadurch gekennzeichnet,**
**dass** das Verbindungsrohr (4), insbesondere teleskopartig, längenverstellbar vorgesehen ist.

4. Draisine (1;1a) nach einem der Ansprüche 1 bis 3,
**dadurch gekennzeichnet,**
**dass** die Position des Sitzrohrs (2) oder/und der Lenkeinheit (3) entlang des Verbindungsrohrs (4;4a) veränderbar ist.

5. Draisine (1;1a) nach einem der Ansprüche 1 bis 4,
**dadurch gekennzeichnet,**
**dass** das Verbindungsrohr (4) zumindest zwei Teilrohre (4',4",4‴) umfasst, die zumindest teilweise ineinander angeordnet sind, wobei vorzugsweise eines der Teilrohre (4') fest mit dem Sitzrohr (2) verbunden ist und/oder ein anderes der Teilrohre (4‴) fest mit der Lenkeinheit (3) verbunden ist.

6. Draisine (1;1a) nach Anspruch 5,
**dadurch gekennzeichnet,**
**dass** eines der Teilrohre (4',4",4‴) ein Verbinderteilrohr (4") bildet, das zumindest zwei der Teilrohre (4',4‴) miteinander, insbesondere lösbar, verbindet und vorzugsweise innerhalb der zumindest zwei Teilrohre (4',4‴) angeordnet ist.

7. Draisine (1;1a) nach einem der Ansprüche 1 bis 6,
**dadurch gekennzeichnet,**
**dass** die Draisine (1;1a) zur Anordnung in einer Komfortfahrstellung und in einer Kompaktfahrstellung eingerichtet ist, wobei der Abstand zwischen einem an dem Sitzrohr (2) angeordneten Hinterrad (10) und einem an der Lenkeinheit (3) angeordneten Vorderrad (11) in der Komfortfahrstellung größer ist als in der Kompaktfahrstellung.

8. Draisine (1;1a) nach einem der Ansprüche 1 bis 7,
**dadurch gekennzeichnet,**
**dass** die Lenkeinheit (3) ein zumindest abschnittsweise, insbesondere vollständig, geradliniges Lenkrohr (6) umfasst, wobei das Lenkrohr (6) oder eine zumindest teilweise in dem Lenkrohr (6) angeordnete Lenkstütze (7) eine Halterung für einen Lenker (16) aufweist.

9. Draisine (1;1a) nach einem der Ansprüche 1 bis 8,
**dadurch gekennzeichnet,**
**dass** die Draisine (1;1a) zur Anordnung in einer Packstellung eingerichtet ist, in welcher die Länge des Verbindungsrohrs (4;4a) auf eine minimale Länge reduziert ist, die Position des Sitzrohrs (2) und/oder der Lenkeinheit (3) entlang des Verbindungsrohrs (4;4a) auf einen minimalen Abstand verstellt ist und/oder das Verbindungsrohr (4;4a) von dem Sitzrohr und/oder der Lenkeinheit gelöst ist.

10. Draisine (1;1a) nach Anspruch 9,
**dadurch gekennzeichnet,**
**dass** in der Packstellung eine zumindest teilweise in dem Sitzrohr (2) angeordnete Sattelstütze (5) mit dem einer Halterung für einen Sattel (15) abgewandten Ende aus dem Sitzrohr (2) herausragt und/oder das der Lenkerhalterung abgewandte Ende der Lenkstütze (7) aus dem Lenkrohr (6) herausragt, wobei vorzugsweise die Lenkstütze (7) verdreht ist in dem Lenkrohr (6) derart, dass eine Längsachse des Lenkers (16) in einem Winkel von 70 ° bis 90 ° zu der Rotationsachse des Vorderrads (11) angeordnet ist.

11. Draisine (1;1a) nach den Ansprüchen 4 und 9, nach den Ansprüchen 4 und 10, nach den Ansprüchen 5 und 9 oder nach den Ansprüchen 5 und 10, **dadurch gekennzeichnet,**
**dass** in der Packstellung zumindest eines der Teilrohre (4"), insbesondere das Verbinderteilrohr (4"), in dem Sitzrohr (2) angeordnet ist und/oder die Sattelstützte (5) in einem anderen Teilrohr (4') angeordnet ist.

12. Draisine (1;1a) nach einem der Ansprüche 1 bis 11,
**dadurch gekennzeichnet,**
**dass** das Verbindungsrohr (4;4a), insbesondere in der Kompaktfahrstellung und/oder der Packstellung, mit seinem der Lenkeinheit (3) abgewandten Ende über das Sitzrohr (2) hinausragt.

13. Draisine (1;1a) nach einem der Ansprüche 1 bis 12,
**dadurch gekennzeichnet,**
**dass** das Hinterrad (10) an dem Sitzrohr (2) angeordnet ist derart, dass eine Radachse (12) des Hinterrads (10) unmittelbar oder mittels einer Halterung (8) an dem Sitzrohr (2) gehalten ist.

14. Draisine (1;1a) nach einem der Ansprüche 8 bis 13,
**dadurch gekennzeichnet,**
**dass** eine Rotationsachse des Vorderrads (11) in Richtung hin zu dem Sitzrohr (2) zu einer Längsachse des Lenkrohrs (6) versetzt angeordnet ist.

15. Draisine (1;1a) nach einem der Ansprüche 8 bis 14,
**dadurch gekennzeichnet,**
**dass** die Lenkeinheit (3) ein Drehgelenk (14) aufweist, mit dem das Lenkrohr (6) um die Drehachse des Drehgelenks (14) schwenkbar ist, wobei das Lenkrohr (6) vorzugsweise im Abstand zu der Drehachse des Drehgelenks (14) gehalten ist.

## Claims

1. Draisine (1; 1a), in particular a balance bike, which comprises a rectilinear seat tube (2), a unit (3) for steering the Draisine (1; 1a), and a tube (4; 4a) for connecting the seat tube (2) and the steering unit (3), wherein the seat tube (2) and the connecting tube (4; 4a) are arranged so as to be offset with respect to one another,
**characterized**
**in that** a longitudinal axis of the connecting tube (4; 4a) is arranged in a plane of symmetry of the rear wheel (10) perpendicular to an axis of rotation of a rear wheel (10) of the Draisine (1; 1a).

2. Draisine (1; 1a) according to Claim 1,
**characterized**
**in that** the connecting tube (4; 4a) is removable.

3. Draisine (1; 1a) according to Claim 1 or 2,
**characterized**
**in that** the connecting tube (4) is intended to be adjustable in length, in particular telescopically.

4. Draisine (1; 1a) according to one of Claims 1 to 3, **characterized**
**in that** the position of the seat tube (2) and/or of the steering unit (3) along the connecting tube (4; 4a) is variable.

5. Draisine (1; 1a) according to one of Claims 1 to 4, **characterized**
**in that** the connecting tube (4) comprises at least two partial tubes (4', 4", 4"'), which are arranged at least partially inside one another, wherein preferably one of the partial tubes (4') is fixedly connected to the seat tube (2) and/or another of the partial tubes (4‴) is fixedly connected to the steering unit (3).

6. Draisine (1; 1a) according to Claim 5,
**characterized**
**in that** one of the partial tubes (4', 4", 4"') forms a connector partial tube (4") that connects at least two of the partial tubes (4', 4"') to one another, in particular releasably, and is preferably arranged within the at least two partial tubes (4', 4‴).

7. Draisine (1; 1a) according to one of Claims 1 to 6, **characterized**
**in that** the Draisine (1; 1a) is configured to be arranged in a comfort riding position and in a compact riding position, wherein the distance between a rear wheel (10) arranged on the seat tube (2) and a front wheel (11) arranged on the steering unit (3) is greater in the comfort riding position than in the compact riding position.

8. Draisine (1; 1a) according to one of Claims 1 to 7, **characterized**
**in that** the steering unit (3) comprises a steering tube (6), which is, at least in certain portions, in particular entirely, rectilinear, wherein the steering tube (6) or a steering post (7) arranged at least partially in the steering tube (6) has a mount for a handlebar (16).

9. Draisine (1; 1a) according to one of Claims 1 to 8, **characterized**
**in that** the Draisine (1; 1a) is configured to be arranged in a packing position in which the length of the connecting tube (4; 4a) is reduced to a minimum length, the position of the seat tube (2) and/or of the steering unit (3) along the connecting tube (4; 4a) is adjusted to a minimum distance and/or the connecting tube (4; 4a) is detached from the seat tube and/or the steering unit.

10. Draisine (1; 1a) according to Claim 9,
**characterized**
**in that**, in the packing position, a seat post (5) arranged at least partially in the seat tube (2) projects, by way of the end facing away from a mount for a saddle (15), out of the seat tube (2) and/or the end of the steering post (7) facing away from the handlebar mount projects out of the steering tube (6), wherein the steering post (7) is preferably rotated in the steering tube (6) in such a manner that a longitudinal axis of the handlebar (16) is arranged at an angle of 70° to 90° with respect to the axis of rotation of the front wheel (11).

11. Draisine (1; 1a) according to Claims 4 and 9, according to Claims 4 and 10, according to Claims 5 and 9 or according to Claims 5 and 10,
**characterized**
**in that**, in the packing position, at least one of the partial tubes (4"), in particular the connector partial tube (4"), is arranged in the seat tube (2) and/or the seat post (5) is arranged in another partial tube (4').

12. Draisine (1; 1a) according to one of Claims 1 to 11, **characterized**
**in that** the connecting tube (4; 4a), in particular in the compact riding position and/or the packing position, projects, by way of its end facing away from the steering unit (3), beyond the seat tube (2).

13. Draisine (1; 1a) according to one of Claims 1 to 12, **characterized**
**in that** the rear wheel (10) is arranged on the seat tube (2) in such a manner that a wheel axle (12) of the rear wheel (10) is held on the seat tube (2) directly or by means of a mount (8).

14. Draisine (1; 1a) according to one of Claims 8 to 13, **characterized**
**in that** an axis of rotation of the front wheel (11) is arranged so as to be offset towards the seat tube (2) with respect to a longitudinal axis of the steering tube (6).

15. Draisine (1; 1a) according to one of Claims 8 to 14, **characterized**
**in that** the steering unit (3) has a rotary joint (14) by means of which the steering tube (6) can be pivoted about the axis of rotation of the rotary joint (14), wherein the steering tube (6) is preferably held at a distance from the axis of rotation of the rotary joint (14).

## Revendications

1. Draisienne (1 ; 1a), en particulier vélo sans pédales, comprenant un tube de siège rectiligne (2), une unité (3) destinée à diriger la draisienne (1 ; 1a), et un tube (4 ; 4a) destiné à relier le tube de siège (2) et l'unité de direction (3), le tube de siège (2) et le tube de liaison (4 ; 4a) étant décalés l'un par rapport à l'autre,
**caractérisée en ce que**
un axe longitudinal du tube de liaison (4 ; 41) est disposé dans un plan de symétrie d'une roue arrière (10), lequel est perpendiculaire à un axe de rotation de la roue arrière (10) de la draisienne (1 ; 1a).

2. Draisienne (1 ; 1a) selon la revendication 1,
**caractérisée en ce que**
le tube de liaison (4 ; 4a) est amovible.

3. Draisienne (1 ; 1a) selon la revendication 1 ou 2,
**caractérisée en ce que**
le tube de liaison (4) est prévu de manière réglable en longueur, en particulier de manière télescopique.

4. Draisienne (1 ; 1a) selon l'une des revendications 1 à 3,
**caractérisée en ce que**
la position du tube de siège (2) et/ou de l'unité de direction (3) peut être modifiée le long du tube de liaison (4 ; 4a).

5. Draisienne (1 ; 1a) selon l'une des revendications 1 à 4,
**caractérisée en ce que**
le tube de liaison (4) comprend au moins deux tubes partiels (4', 4", 4"') qui sont au moins partiellement emboîtés l'un dans l'autre, l'un des tubes partiels (4') étant de préférence relié solidairement au tube de siège (2) et/ou un autre des tubes partiels (4"') étant relié solidairement à l'unité de direction (3).

6. Draisienne (1 ; 1a) selon la revendication 5,
**caractérisée en ce que**
l'un des tubes partiels (4', 4" 4"') forme un tube partiel de liaison (4") qui relie au moins deux des tubes partiels (4', 4"') entre eux, en particulier de manière amovible, et qui est de préférence disposé à l'intérieur desdits au moins deux tubes partiels (4', 4"').

7. Draisienne (1 ; 1a) selon l'une des revendications 1 à 6,
**caractérisée en ce que**
la draisienne (1 ; 1a) est conçue pour être disposée dans une position de conduite confortable et dans une position de conduite compacte, la distance entre une roue arrière (10) disposée au niveau du tube de siège (2) et une roue avant (11) disposée au niveau l'unité de direction (3) étant plus grande dans la position de conduite confortable que dans la position de conduite compacte.

8. Draisienne (1 ; 1a) selon l'une des revendications 1 à 7,
**caractérisée en ce que**
l'unité de direction (3) comprend un tube de direction (6) qui est rectiligne au moins en partie, en particulier en totalité, et le tube de direction (6) ou une tige de direction (7), disposée au moins partiellement dans le tube de direction (6), présente un dispositif de retenue d'un guidon (16).

9. Draisienne (1 ; 1a) selon l'une des revendications 1 à 8,
**caractérisée en ce que**
la draisienne (1 ; 1a) est conçue pour être disposée dans une position de rangement dans laquelle la longueur du tube de liaison (4 ; 4a) est réduite à une longueur minimale, la position du tube de siège (2) et/ou de l'unité de direction (3) le long du tube de liaison (4 ; 4a) est réglée à une distance minimale, et/ou le tube de liaison (4 ; 4a) est détaché du tube de siège et/ou de l'unité de direction.

10. Draisienne (1 ; 1a) selon la revendication 9,
**caractérisée en ce que**
en position de rangement, une tige de selle (5) disposée au moins partiellement dans le tube de siège (2) présente une extrémité qui est détournée d'un dispositif de retenue d'une selle (15) et qui dépasse du tube de siège (2), et/ou l'extrémité de la tige de direction (7) est détournée du dispositif de retenue du guidon (7) et dépasse du tube de direction (6), et de préférence, la tige de direction (7) est tournée dans le tube de direction (6) de telle sorte qu'un axe longitudinal du guidon (16) est disposé selon un angle de 70° à 90° par rapport à l'axe de rotation de la roue avant (11).

11. Draisienne (1 ; 1a) selon les revendications 4 et 9, selon les revendications 4 et 10, selon les revendications 5 et 9 ou selon les revendications 5 et 10,
**caractérisée en ce que**
en position de rangement, l'un au moins des tubes partiels (4"), en particulier le tube partiel de liaison (4"), est disposé dans le tube de siège (2), et/ou la tige de selle (5) est disposée dans un autre tube partiel (4').

12. Draisienne (1 ; 1a) selon l'une des revendications 1 à 11,
**caractérisée en ce que**
le tube de liaison (4 ; 4a), en particulier en position de conduite compacte et/ou en position de rangement, a son extrémité, détournée de l'unité de direction (3), qui dépasse du tube de siège (2).

13. Draisienne (1 ; 1a) selon l'une des revendications 1 à 12,
**caractérisée en ce que**
la roue arrière (10) est disposée au niveau du tube de siège (2) de telle sorte qu'un axe de roue (12) de la roue arrière (10) est maintenu sur le tube de siège (2) soit directement, soit au moyen d'un dispositif de retenue (8).

14. Draisienne (1 ; 1a) selon l'une des revendications 8 à 13,
**caractérisée en ce que**
un axe de rotation de la roue avant (11) est décalé vers le tube de siège (2) par rapport à un axe longitudinal du tube de direction (6).

15. Draisienne (1 ; 1a) selon l'une des revendications 8 à 14,
**caractérisée en ce que**
l'unité de direction (3) comporte une articulation pivotante (14) permettant au tube de direction (6) de pivoter autour de l'axe de rotation de l'articulation pivotante (14), le tube de direction (6) étant de préférence maintenu à distance de l'axe de rotation de l'articulation pivotante (14).
